# EUROPEAN PATENT SPECIFICATION

(11) **EP 4 027 193 B1**
(45) Date of publication and mention of the grant of the patent: **08.04.2026**
(21) Application number: 22150863.3
(22) Date of filing: 11.01.2022
(51) Int. Cl.: G02F 1/35, G02F 1/39

(54) **FREQUENCY CONVERSION OF A WAVELENGTH DIVISION MULTIPLEXED LIGHT SOURCE**
FREQUENZUMWANDLUNG EINER WELLENLÄNGEN-MULTIPLEXIERTEN LICHTQUELLE
CONVERSION DE FRÉQUENCE D'UNE SOURCE LUMINEUSE MULTIPLEXÉE PAR RÉPARTITION EN LONGUEUR D'ONDE

(30) Priority: 11.01.2021 US 202117145835; 30.08.2021 US 202117461406
(43) Date of publication of application: 13.07.2022
(73) Proprietor: TOPTICA Photonics, Inc., Pittsford, NY 14534 (US)
(72) Inventor: HEINIGER, ADAM TAYLOR, Rochester, 14618 (US); CICH, Matthew James, Roseville, 55113 (US)
(74) Representative: Schneiders & Behrendt Bochum

(56) References cited:
- EP-A1- 3 096 183
- WO-A1-2004/107033
- US-A1- 2011 261 438
- US-A1- 2019 089 121
- YABAI HE ET AL: "Tunable Single-Mode Operation of a Pulsed Optical Parametric Oscillator Pumped by a Multimode Laser", APPLIED OPTICS, vol. 40, no. 27, 1 September 2001 (2001-09-01), US, pages 4836 - 48, XP055227839, ISSN: 0003-6935, DOI: 10.1364/AO.40.004836

## Description

### FIELD

The present invention relates to methods and devices for generating a frequency converted wavelength division multiplexed light source.

### BACKGROUND

There is a need for free-space optical communications systems with information transmission rates matching those of fiber optic systems. Free-space optical systems allow for faster and more secure data transmission than commonly used radiofrequency (RF) signals. However, most light sources used for optical fiber telecommunications operate at a wavelength band optimized for transmission in optical fiber and not for free-space communication. This invention relates to a method and device that can convert multiplexed communications channels from the telecom band to the mid-infrared (MIR).

Modern internet speeds are made possible by networks of optical fibers. In optical communication systems, information is encoded onto otherwise continuous-wave laser light by modulation of the amplitude or phase of the laser light. A single optical communication signal can transmit information at a rate of more than 10 gigabytes per second (Gbps). An optical fiber can carry many independent signals, provided that the optical spectrum of each signal does not overlap. This technique, called wavelength division multiplexing (WDM), can increase the capacity of a single optical fiber to much more than 1 terabyte per second. Individual information channels each transmitting 10 Gbps are spectrally spaced at an optical frequency distance of at minimum 12.5 GHz without significant crosstalk between channels. 12.5 GHz corresponds to 0.100 nm at a wavelength of 1550 nm (see G.P. Agarawal, Fiber-Optic Communication Systems, 4th Ed., Wiley, 2010, pp. 223-230).

Fiber optic communication systems have led to drastic changes in the way humans conduct work and pursue entertainment, but they are not suitable for all information delivery needs. For example, there is little economic advantage to installing fiber optic systems in remote or rural areas of the world with low population density. In these cases, free-space communication systems can be used to transit information through the air, either from the ground to a satellite link, or between two terrestrial links. Several private enterprises have plans to launch constellations of thousands of satellites in the 2020s and 2030s to offer the internet anywhere in the world.

Currently, most communication between ground and satellite links is done in the RF, which does not readily permit the Tbps rates of optical communications. Optical communication signals in fiber have wavelengths between 1260 - 1620 nm, because this wavelength range corresponds to a transmission maximum in fused silica optical fiber. In Earth's atmosphere, optical transmission is optimal in high transmission "windows" where absorption due to water and other atmospheric species is minimal. This includes MIR spectral bands between 3 - 5 µm and 8 - 12 µm. Thus, the optimal free-space communications system would use light in these wavelength bands.

WDM light sources for telecommunications typically are composed of multiple distributed feedback (DFB) diode lasers with wavelengths between 1260 - 1620 nm. Each laser is attributed to one channel of the WDM light source. Each laser is continuous-wave, they have center frequencies spectrally separated by the WDM channel spacing, and they have spectral width that is much narrower than the channel spacing. Each laser can be modulated in amplitude or phase in order to encode information on that wavelength channel. For long distance information transfer, rare earth element-doped optical fiber amplifiers can be used to boost WDM system output power. Massive development in telecommunications components over the last few decades has greatly reduced the price of DFB diode lasers and optical amplifiers in the telecommunications band.

Lasers that directly emit in the MIR are multiple orders of magnitude more expensive than in the telecom, and they do not have the Watt-level powers needed for long distance propagation in the atmosphere. Also, optical devices used to encode information are not readily available in the MIR. Non-linear optical frequency conversion is used to generate light in "difficult" optical frequency ranges like the MIR, and when done correctly, information encoded on NIR light is transferred to the MIR light. Difference frequency generation between a 1083 nm ytterbium fiber laser and a 1550 nm communications signal generated a few milliwatts of information-carrying signal near 3600 nm (see Wei Wang, et. al., 5 Gbaud QPSK coherent transmission in the mid-infrared). It is likely that this could be extended to WDM conversion, but the power levels are insufficient for the application.

Continuous wave optical parametric oscillators (CWOPO) convert high power pump light from the near-infrared (NIR) to the MIR with high conversion efficiency, and thus high power (see David B Foote, et al., High-resolution, broadly-tunable mid-IR spectroscopy using a continuous wave optical parametric oscillator). However, it is typically understood that a continuous-wave pump is required for CWOPOs, so that a WDM MIR system would require many expensive CWOPOs, and expensive MIR modulation components.

US 2019/089121 discloses a tunable light source that combines a broadband pump source, an optical parametric oscillator (OPO), and additional nonlinear processes to generate a broadband, tunable emission in the near-infrared (NIR), visible (VIS), and ultraviolet (UV) ranges. This light source delivers high power with short coherence length, making it particularly suitable for applications in microscopy and biotechnology. The OPO is configured to achieve efficient frequency conversion and light generation across various wavelengths.

Another relevant work is the publication titled "Tunable Single-Mode Operation of a Pulsed Optical Parametric Oscillator Pumped by a Multimode Laser" (Yabai He and Brian J.Orr, 2001 Optical Society of America), which explores a pulsed OPO system designed to generate tunable singlelongitudinal-mode signal radiation. This system, based on periodically poled lithium niobate (PPLN) in a ring cavity, uses injection seeding by a single-mode tunable diode laser to achieve narrow-linewidth output. While the study demonstrates excellent performance, including a narrow optical bandwidth of less than 120 MHz and continuous tunability over a broad spectral range, the system's complexity and the need for precise control of cavity length and crystal temperature are notable limitations.

US 2011/0261438 A1 discloses a system for producing fast and broadly tunable coherent optical radiation using OPOs. It allows for rapid wavelength adjustments within a wide range, especially in the near- and mid-infrared regions, using continuous wave or pulsed lasers.

In EP 3 096 183 A1 discloses generating narrow linewidth laser radiation using a quasiincoherent broadband source to pump an OPO, converting low-quality pump light into high-quality output beams.

Finally, WO 2004/107033 A1 describes generating a broad and stable frequency comb for telecommunications applications like Wavelength Division Multiplexing (WDM). It combines a pumpenhanced optical parametric generator with a phase modulator to create multiple evenly spaced optical frequencies.

Against this background it is readily appreciated that there is an unmet need for an improved technique for generating a frequency converted high power wavelength division multiplexed optical communication signal.

### SUMMARY

An object of the invention is to provide a method and a laser device that enable the generation of a frequency converted WDM source and that are easy to implement at low cost.

In accordance with the invention, a method of generating frequency converted laser radiation is disclosed. In one specific though non-limiting embodiment, the method comprises generating pump laser radiation that is a (high power) WDM optical communication signal; passing the pump laser radiation through the non-linear medium of a singly resonant, single frequency optical parametric oscillator, wherein the pump laser radiation is continuous wave or quasi-continuous wave such that parametric oscillation is maintained; and coupling out the non-resonant idler or signal laser radiation from the optical parametric oscillator as usable frequency converted laser radiation.

In another example embodiment, a laser device suitable for practicing the invention comprises a pump laser source configured to generate pump laser radiation that is a high power WDM optical communication signal; a singly resonant, single frequency optical parametric oscillator comprising a non-linear medium located in an optical cavity, with the pump laser radiation passing through the non-linear medium, wherein the optical cavity is configured to be resonant at only a single cavity mode, wherein the pump laser radiation is continuous wave or quasi-continuous wave such that parametric oscillation is maintained; and an arrangement of one or more optical components configured to couple out a non-resonant idler or signal laser radiation from the optical parametric oscillator as usable frequency converted laser radiation.

In another example embodiment, a singly resonant, single frequency optical parametric oscillator (meaning that the optical cavity of the optical parametric oscillator is resonant at only a single cavity mode) is used rather than an optical parametric oscillator with a cavity that is resonant at many different cavity modes, the latter being typical in known synchronized arrangements of mode-locked pump laser sources and optical parametric oscillators. Optical parametric oscillation on the basis of an optical cavity that is configured to be resonant at only a single cavity mode requires that the pump laser radiation is continuous wave (including quasi-continuous wave). In a WDM pump source wherein information is encoded on individual channels via amplitude modulation, there may be a time bin or consecutive time bins in which all communication channels carry zero amplitude. If this dark state lasts longer than the ring-down time of the optical parametric oscillator cavity, then frequency conversion will be lost. When a signal returns, it many time bins may pass before oscillation is restored, and some bits will be lost. To prevent this from occurring, one channel can be dedicated to maintaining oscillation when amplitude-based modulation is employed. This dedicated channel will be left always in the "on" state.

If the optical parametric oscillator is resonant at the frequency of the signal (respectively idler) laser radiation, then the non-resonant idler (respectively signal) laser radiation coupled out from the optical parametric oscillator has a spectrum which is the convolution of the spectrum of the pump laser radiation and the single-line, narrow-linewidth cavity mode spectrum of the singly resonant and single frequency optical parametric oscillator. In other words, the spectrum of the non-resonant output, i.e., the usable frequency converted laser radiation coupled out from the optical parametric oscillator is a frequency converted replica of the spectrum of the pump laser radiation. To achieve this, the resonant linewidth of the singly resonant, single frequency optical parametric oscillator should be (significantly) smaller than the linewidths of the equidistant spectral lines contained in the pump laser radiation.

In yet another embodiment, the frequency of the usable frequency converted laser radiation is adjusted by changing the phase matching conditions of the non-linear medium; and/or changing the resonant frequency of the singly resonant, single-frequency optical parametric oscillator, e.g., by changing the cavity length; and/or changing the resonant mode of the singly resonant single-frequency optical parametric oscillator; and/or tuning the center frequency of the pump laser radiation.

The spectral extent of the frequency converted laser radiation is limited by the phase matching bandwidth of the non-linear medium. Single-frequency optical parametric oscillators efficiently convert the pump laser radiation, so that the power of the usable frequency converted laser radiation can be expected to be 10-50% of the power of the pump laser radiation.

In practice, the center frequencies of WDM channels contained in the non-resonant output of the optical parametric oscillator will drift if there is drift in the resonant cavity mode, e.g., due to changing environmental conditions. For some applications this drift may be insignificant, but other applications require high stability of the output spectrum. Drift of the frequency converted spectrum can be actively stabilized in accordance with the invention by electronic feedback to the spectrum of the pump laser radiation and/or to the resonant mode of the singly resonant, single-frequency optical parametric oscillator.

In one embodiment of the invention, the pump laser radiation is generated by beam combining multiple continuous wave sources that can be independently modulated in amplitude or phase. For example, many single-frequency continuous wave distributed feedback (DFB) diode lasers are combined into a single fiber. A rare earth-doped optical fiber amplifier is used to amplify the thus generated WDM source before passing it through the non-linear medium of the optical parametric oscillator. Such amplifiers are relatively inexpensive and available at an output power in the range of 1-1000 W. Preferably, at least a single channel of the WDM source is always maintained in the "on" state, i.e. without amplitude modulation, in order to prevent a situation where amplitude modulation leaves all channels with zero power. Loss of power to the optical parametric oscillator for sufficient time will halt frequency conversion.

Advantageously, a single optical parametric oscillator design can be used with many different WDM channel spacings.

One advantage of the invention is that it enables efficient frequency conversion at low cost and low complexity. The singly resonant, single-frequency optical parametric oscillator itself has low or moderate complexity (depending on whether the application demands that the frequency converted optical frequency comb is compensated for cavity drift). Additionally, the pump laser radiation is generated from standard low-cost telecommunications equipment.

### BRIEF DESCRIPTION OF THE DRAWINGS

The enclosed drawings disclose preferred embodiments of the present invention. It should be understood, however, that the drawings are designed for the purpose of illustration only and not as a definition of the limits of the invention.
Figure 1 schematically illustrates an example laser device according to an embodiment of the invention as a block diagram.
Figure 2 is a more detailed illustration of the example laser device of Figure 1.

### DETAILED DESCRIPTION

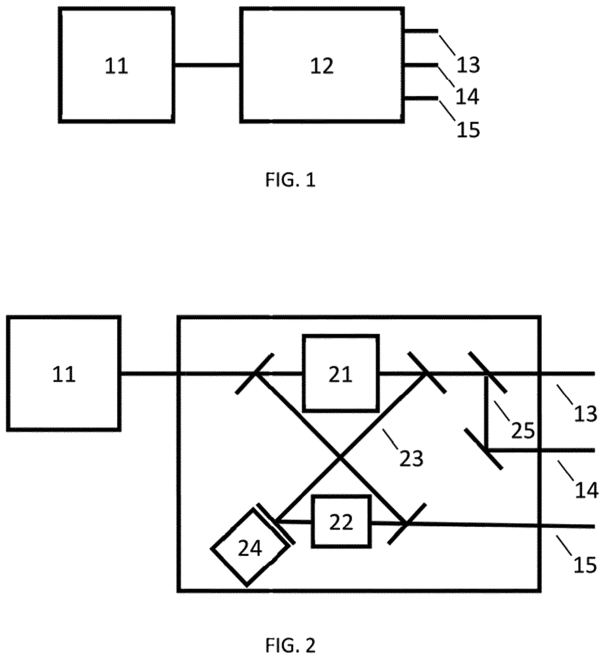

Figure 1 schematically illustrates a laser device according to an embodiment of the invention. In one embodiment, the laser device comprises a pump laser source 11. In a further embodiment, the spectrum of the pump laser source 11 is a wavelength division multiplexed (WDM) optical communications source.

In another embodiment, the pump laser radiation is provided to a singly resonant, single-frequency optical parametric oscillator 12. In the depicted embodiment, the optical parametric oscillator 12 has three outputs, namely a residual pump output 13, a resonant output 15 and a non-resonant output 14.

In one example embodiment, the non-resonant (idler or signal) laser radiation is coupled out from the optical parametric resonator 12 as usable frequency converted laser radiation via output 14. The (idler or signal) laser radiation at the non-resonant output 14 has a spectrum which is the convolution of the spectrum of the pump laser radiation and the spectrum of the single resonant cavity mode of the optical parametric oscillator 12. In such case the single cavity mode spectrum is generally, though not necessarily, much narrower than the spacing between the spectral lines in the pump spectrum, thus the laser radiation at the non-resonant output 14 also is a wavelength division multiplexed optical communications source.

In the example embodiment of Figure 2, a non-linear medium 21 (e.g., a periodically poled non-linear crystal) is placed inside a bow-tie cavity 23 that is resonant for either the signal or idler laser radiation. In one embodiment, an etalon 22 is placed in the cavity 23 outside the beam path of the pump laser radiation and the non-resonant (idler respectively signal laser radiation). In another, the cavity 23 is designed to be resonant at only one single cavity mode that matches the spectrum of the signal or idler laser radiation. In a further embodiment, the residual pump laser radiation and the non-resonant output beam paths (for coupling out the usable frequency converted laser radiation) are split using a dichroic filter 25. In other embodiments, the residual pump 13 and resonant output 15 are accessible to the user of the device as well. According to the invention, the pump laser radiation is continuous wave or quasi-continuous wave such that parametric oscillation is maintained.

In further embodiments, the wavelength division multiplexed optical communications source contained in the spectrum of the usable laser radiation at the non-resonant output 14 is frequency tuned by adjusting the phase matching conditions in the non-linear medium 21, for example, by heating, rotating, or shifting the medium. In one embodiment, the wavelength division multiplexed optical communication source contained in the radiation at the non-resonant output 14 is also tuned by adjusting the length of the cavity, for example, by using a piezoelectric transducer 24 carrying one of the cavity mirrors and/or by rotating the etalon 22.

In other embodiments, the wavelength division multiplexed optical communication source at the non-resonant output 14 can further be tuned by selecting a different cavity mode for oscillation, for example, by rotating the etalon 22 to such a degree that a cavity mode hop occurs. In further embodiments, the wavelength division multiplexed optical communication source at the output 14 is tuned by wavelength tuning of the pump laser source 11. In still further embodiments, the pump laser source 11 is wavelength tuned and the resonant mode of the cavity 23 does not change, so energy conservation causes the radiation at the non-resonant output 14 to change by the same amount of energy as the pump laser radiation.

Though the present invention has been depicted and described in detail above with respect to several exemplary embodiments, those of ordinary skill in the art will also appreciate that minor changes to the description, and various other modifications, omissions and additions may also be made without departing from the scope thereof.

## Claims

1. A method for generating frequency converted laser radiation, comprising the steps of:
- generating pump laser radiation that is a wavelength division multiplexed optical communication signal, wherein said pump laser radiation is generated by a WDM source, an emission spectrum of which comprises a plurality of spectral lines, each of which is an information carrier, wherein each information carrier is independently modulated in amplitude and/or phase in order to independently encode information on that carrier;
- passing the pump laser radiation through a non-linear medium of a singly resonant, single-frequency optical parametric oscillator, wherein the pump laser radiation is continuous wave or quasi-continuous wave such that parametric oscillation is maintained; and
- coupling out non-resonant idler or signal laser radiation from the optical parametric oscillator as usable frequency converted laser radiation.

2. Method of claim 1, wherein the spectrum of the pump laser radiation is convoluted with a narrow-linewidth cavity mode spectrum of the optical parametric oscillator, such that the pump laser radiation and the usable frequency converted laser radiation coupled out from the optical parametric oscillator each have a spectrum, wherein the spectrum of the usable frequency converted laser radiation is a frequency converted replica of the spectrum of the pump laser radiation.

3. Method of claim 2, wherein the resonant linewidth of the singly resonant optical parametric oscillator is smaller than the linewidths of individual spectral lines attributed to optical communications channels contained in the pump laser radiation.

4. Method of claim 2 or 3, wherein the frequency of the usable frequency converted laser radiation is adjusted by
- changing the phase matching conditions of the non-linear medium and/or
- changing the resonant frequency of the singly resonant, single-frequency optical parametric oscillator and/or
- changing the resonant mode of the singly resonant, single-frequency optical parametric oscillator and/or
- tuning the center frequency of the pump laser radiation.

5. Method of any one of claims 2-4, wherein the spectrum of the usable frequency converted laser radiation is actively stabilized by electronic feedback to the spectrum of the pump laser radiation and/or to the resonant mode of the singly resonant optical parametric oscillator.

6. Method of any one of claims 1-5, wherein a single channel of the WDM source is maintained in the "on" state, i.e. without amplitude modulation, in order to prevent a situation where amplitude modulation leaves all channels with zero power.

7. A laser device comprising:
- a pump laser source comprised of a wavelength division multiplexed optical communication source arranged for emitting pump laser radiation, wherein said wavelength division multiplexed optical communication source comprises a laser source arranged for emitting pump laser radiation comprising a plurality of spectral lines, each of which is an information carrier attributed to one of a plurality of channels of said wavelength division multiplexed optical communication source, wherein each information carrier is independently modulated in amplitude and/or phase in order to independently encode information on that carrier;
- a singly resonant, single frequency optical parametric oscillator comprising a non-linear medium located in an optical cavity, with the pump laser radiation passing through the non-linear medium, wherein the optical cavity is configured to be resonant at only a single cavity mode, wherein the pump laser radiation is continuous wave or quasi-continuous wave such that parametric oscillation is maintained; and
- an arrangement of one or more optical components configured to couple out non-resonant idler or signal laser radiation from the optical parametric oscillator as usable frequency converted laser radiation.

8. Laser device of claim 7, wherein the optical cavity is a bow-tie cavity.

9. Laser device of claim 7 or 8, wherein an etalon is located within the optical cavity in the beam path of the resonant signal or idler laser radiation and outside the beam paths of the pump laser radiation and the non-resonant idler or signal laser radiation.

10. Laser device of any one of claims 7-9, wherein the non-linear medium is a periodically poled non-linear crystal.

11. Laser device of any one of claims 8-10, wherein a single channel of said wavelength division multiplexed optical communication source is maintained in the "on" state without amplitude modulation, in order to prevent a situation where amplitude modulation leaves all channels with zero power.

## Patentansprüche

1. Ein Verfahren zur Erzeugung frequenzkonvertierter Laserstrahlung, umfassend die Schritte:
- Erzeugen von Pumplaserstrahlung, die ein optisches Wellenlängen-Multiplex-Kommunikationssignal ist, wobei die Pumplaserstrahlung von einer WDM-Quelle (WDM = Wavelength Division Multiplexing) erzeugt wird, deren Emissionsspektrum eine Vielzahl von Spektrallinien umfasst, von denen jede ein Informationsträger ist, wobei jeder Informationsträger unabhängig in Amplitude und/oder Phase moduliert wird, um Informationen auf diesem Träger unabhängig zu codieren;
- Leiten der Pumplaserstrahlung durch ein nichtlineares Medium eines einzel-resonanten, ein-frequenten optischen parametrischen Oszillators, wobei die Pumplaserstrahlung eine kontinuierliche Welle oder eine quasi-kontinuierliche Welle ist, so dass die parametrische Oszillation aufrechterhalten wird; und
- Auskoppeln von nichtresonanter Idlerstrahlung oder Signallaserstrahlung aus dem optischen parametrischen Oszillator als nutzbare frequenzkonvertierte Laserstrahlung.

2. Verfahren nach Anspruch 1, wobei das Spektrum der Pumplaserstrahlung mit einem schmalbandigen Resonatormoden-Spektrum des optischen parametrischen Oszillators gefaltet wird, so dass die Pumplaserstrahlung und die aus dem optischen parametrischen Oszillator ausgekoppelte nutzbare frequenzkonvertierte Laserstrahlung jeweils ein Spektrum aufweisen, wobei das Spektrum der nutzbaren frequenzkonvertierten Laserstrahlung eine frequenzkonvertierte Kopie des Spektrums der Pumplaserstrahlung ist.

3. Verfahren nach Anspruch 2, wobei die Resonanzlinienbreite des einzel-resonanten optischen parametrischen Oszillators kleiner ist als die Linienbreiten einzelner Spektrallinien, die optischen Kommunikationskanälen in der Pumplaserstrahlung zugeordnet sind.

4. Verfahren nach Anspruch 2 oder 3, wobei die Frequenz der nutzbaren frequenzkonvertierten Laserstrahlung eingestellt wird durch
- Ändern der Phasenanpassungsbedingungen des nichtlinearen Mediums und/oder
- Ändern der Resonanzfrequenz des einzel-resonanten, ein-frequenten optischen parametrischen Oszillators und/oder
- Ändern des Resonanzmodus des einzel-resonanten, ein-frequenten optischparametrischen Oszillators und/oder
- Abstimmen der Mittenfrequenz der Pumplaserstrahlung.

5. Verfahren nach einem der Ansprüche 2 - 4, wobei das Spektrum der nutzbaren frequenzkonvertierten Laserstrahlung durch elektronische Rückkopplung auf das Spektrum der Pumplaserstrahlung und/oder auf den Resonanzmodus des einzel-resonanten optischen parametrischen Oszillators aktiv stabilisiert wird.

6. Verfahren nach einem der Ansprüche 1 - 5, wobei ein einzelner Kanal der WDM-Quelle im "Ein"-Zustand gehalten wird, d. h. ohne Amplitudenmodulation, um eine Situation zu verhindern, in der die Amplitudenmodulation alle Kanäle mit Nullleistung zurücklässt.

7. Eine Laservorrichtung, umfassend:
- eine Pumplaserquelle bestehend aus einer optischen WellenlängenMultiplex-Kommunikationsquelle, die zum Emittieren von Pumplaserstrahlung eingerichtet ist, wobei die optische Wellenlängen-Multiplex-Kommunikationsquelle eine Laserquelle umfasst, die zum Emittieren von Pumplaserstrahlung eingerichtet ist, die eine Vielzahl von Spektrallinien umfasst, von denen jede ein Informationsträger ist, der einem von mehreren Kanälen der optischen Wellenlängen-Multiplex-Kommunikationsquelle zugeordnet ist, wobei jeder Informationsträger unabhängig in Amplitude und/oder Phase moduliert wird, um Informationen auf diesem Träger unabhängig zu codieren;
- ein einzel-resonanter, ein-frequenter optischer parametrischer Oszillator, der ein nichtlineares Medium umfasst, das sich in einem optischen Resonator befindet, wobei die Pumplaserstrahlung durch das nichtlineare Medium hindurchgeht, wobei der optische Resonator so konfiguriert ist, dass er nur bei einem einzigen Resonatormode resonant ist, wobei die Pumplaserstrahlung eine kontinuierliche Welle oder eine quasi-kontinuierliche Welle ist, so dass die parametrische Oszillation aufrechterhalten wird; und
- eine Anordnung aus einer oder mehreren optischen Komponenten, die so konfiguriert sind, dass sie nichtresonante Idlerstrahlung oder Signallaserstrahlung aus dem optischen parametrischen Oszillator als nutzbare frequenzkonvertierte Laserstrahlung auskoppeln.

8. Laservorrichtung nach Anspruch 7, wobei der optische Resonator ein Bow-Tie-Resonator ist.

9. Laservorrichtung nach Anspruch 7 oder 8, wobei sich ein Etalon innerhalb des optischen Resonators im Strahlengang der resonanten Signalstrahlung oder Idler-Laserstrahlung und außerhalb der Strahlengänge der Pumplaserstrahlung und der nichtresonanten Idlerstrahlung oder Signallaserstrahlung befindet.

10. Laservorrichtung nach einem der Ansprüche 7 - 9, wobei das nichtlineare Medium ein periodisch gepolter nichtlinearer Kristall ist.

11. Laservorrichtung nach einem der Ansprüche 8 - 10, wobei ein einzelner Kanal der optischen Wellenlängen-Multiplex-Kommunikationsquelle ohne Amplitudenmodulation im _{"}Ein"-Zustand gehalten wird, um eine Situation zu verhindern, in der die Amplitudenmodulation alle Kanäle mit Nullleistung zurücklässt.

## Revendications

1. Procédé pour générer un rayonnement laser à conversion de fréquence, comprenant les étapes suivantes:
- générer un rayonnement laser de pompage qui est un signal de communication optique multiplexé par répartition en longueur d'onde, dans lequel ledit rayonnement laser de pompage est généré par une source WDM (= wavelength division multiplexing), dont le spectre d'émission comprend une pluralité de raies spectrales, chacune d'entre elles étant un support d'informations, dans lequel chaque support d'informations est modulé indépendamment en amplitude et/ou en phase afin de coder indépendamment les informations sur ce support;
- faire passer le rayonnement laser de pompage à travers un milieu non linéaire d'un oscillateur paramétrique optique à résonance unique et à fréquence unique, dans lequel le rayonnement laser de pompage est une onde continue ou quasi continue de telle sorte que l'oscillation paramétrique est maintenue; et
- découplage le rayonnement laser non résonant ou le rayonnement laser de signal provenant de l'oscillateur paramétrique optique en tant que rayonnement laser converti en fréquence utilisable.

2. Procédé selon la revendication 1, dans lequel le spectre du rayonnement laser de pompage est convolué avec un spectre de mode de cavité à largeur de raie étroite de l'oscillateur paramétrique optique, de telle sorte que le rayonnement laser de pompage et le rayonnement laser converti en fréquence utilisable découplé à partir de l'oscillateur paramétrique optique aient chacun un spectre, dans lequel le spectre du rayonnement laser converti en fréquence utilisable est une réplique convertie en fréquence du spectre du rayonnement laser de pompage.

3. Procédé selon la revendication 2, dans lequel la largeur de raie résonante de l'oscillateur paramétrique optique à résonance unique est inférieure aux largeurs de raies spectrales individuelles attribuées aux canaux de communication optique contenus dans le rayonnement laser de pompage.

4. Procédé selon la revendication 2 ou 3, dans lequel la fréquence du rayonnement laser converti en fréquence utilisable est ajustée par
- modifier les conditions d'adaptation de phase du milieu non linéaire et/ou
- modifier la fréquence de résonance de l'oscillateur paramétrique optique à résonance unique et à fréquence unique et/ou
- modifier le mode de résonance de l'oscillateur paramétrique optique à résonance unique et à fréquence unique e et/ou
- régler la fréquence centrale du rayonnement laser de pompage.

5. Procédé selon l'une quelconque des revendications 2 - 4, dans lequel le spectre du rayonnement laser converti en fréquence utilisable est stabilisé activement par rétroaction électronique par rapport au spectre du rayonnement laser de pompage et/ou au mode résonnant de l'oscillateur paramétrique optique à résonance unique.

6. Procédé selon l'une quelconque des revendications 1 - 5, dans lequel un seul canal de la source WDM est maintenu à l'état "active", c'est-à-dire sans modulation d'amplitude, afin d'éviter une situation dans laquelle la modulation d'amplitude laisse tous les canaux avec une puissance nulle.

7. Dispositif laser comprenant:
- une source laser de pompage composée d'une source de communication optique à multiplexage par répartition en longueur d'onde agencée pour émettre un rayonnement laser de pompage, dans lequel ladite source de communication optique à multiplexage par répartition en longueur d'onde comprend une source laser agencée pour émettre un rayonnement laser de pompage comprenant une pluralité de raies spectrales, chacune d'entre elles étant un support d'informations attribué à l'un d'une pluralité de canaux de ladite source de communication optique à multiplexage par répartition en longueur d'onde, dans lequel chaque support d'informations est modulé indépendamment en amplitude et/ou en phase afin de coder indépendamment les informations sur ce support ;
- un oscillateur paramétrique optique à résonance unique et à fréquence unique comprenant un milieu non linéaire situé dans une cavité optique, le rayonnement laser de pompage traversant le milieu non linéaire, dans lequel la cavité optique est configurée pour être résonante à un seul mode de cavité, dans lequel le rayonnement laser de pompage est une onde continue ou une onde quasi continue de telle sorte que l'oscillation paramétrique est maintenue; et
- un agencement d'un ou plusieurs composants optiques configurés pour découplage le rayonnement laser non résonnant ou le rayonnement laser de signal provenant de l'oscillateur paramétrique optique sous forme de rayonnement laser converti en fréquence utilisable.

8. Dispositif laser selon la revendication 7, dans lequel la cavité optique est une cavité en nœud papillon.

9. Dispositif laser selon la revendication 7 ou 8, dans lequel un étalon est situé à l'intérieur de la cavité optique dans le trajet du faisceau du rayonnement laser résonnant de signal ou idler et à l'extérieur des trajets du faisceau du rayonnement laser de pompage et du rayonnement laser non résonnant idler ou de signal.

10. Dispositif laser selon l'une quelconque des revendications 7 - 9, dans lequel le milieu non linéaire est un cristal non linéaire à polarisation périodique.

11. Dispositif laser selon l'une quelconque des revendications 8 - 10, dans lequel un seul canal de ladite source de communication optique multiplexée par répartition en longueur d'onde est maintenu à l'état "active" sans modulation d'amplitude, afin d'éviter une situation dans laquelle la modulation d'amplitude laisse tous les canaux avec une puissance nulle.
